Europäisches Patentamt

European Patent Office

Office européen des brevets

(11) Veröffentlichungsnummer: **0 287 939**
**A2**

(12) **EUROPÄISCHE PATENTANMELDUNG**

(21) Anmeldenummer: 88105860.6

(22) Anmeldetag: 13.04.88

(51) Int. Cl.⁴: **A22C 13/00**

(30) Priorität: 22.04.87 DE 3713479

(43) Veröffentlichungstag der Anmeldung:
26.10.88 Patentblatt 88/43

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Siebrecht, Manfred, Dr.
Buchenweg 10
D-6200 Wiesbaden(DE)

(54) Schlauch, insbesondere künstliche Wursthülle, aus miteinander verbundenen Abschnitten.

(57) Der Schlauch, insbesondere Wursthülle, besteht aus miteinander verbundenen Abschnitten, welche an der Verbindungsstelle etwa im rechten Winkel zur Schlauchlängsachse und zueinander parallel verlaufende Schnittkanten aufweisen und durch ein die Schlauchaußenseite umlaufendes Klebeband miteinander verbunden sind. Bei flachgelegtem Schlauch, welcher zwei parallel sich erstreckende Faltkanten aufweist, liegt der von einer ersten Faltkante zur anderen gegenüberliegenden Faltkante sich erstreckende Teil der Schnittkante des einen Abschnitts im Schlauchinnern und der andere Teil dieser Schnittkante, welcher sich von der zweiten Faltkante zurück zur ersten Faltkante erstreckt, auf der Schlauchaußenseite. Teile der Schnittkante des anderen Abschnitts befinden sich in umgekehrter Anordnung zuerst auf der Schlauchaußenseite und dann im Schlauchinnern.

Fig. 1

# Schlauch, insbesondere künstliche Wursthülle, aus miteinander verbundenen Abschnitten

Die Erfindung bezieht sich auf einen Schlauch, insbesondere auf eine künstliche Wursthülle, der aus miteinander verbundenen Abschnitten besteht. Die Abschnitte enden an der Verbindungsstelle in geradlinigen Schnittkanten, welche etwa im rechten Winkel zur Schlauchlängsachse verlaufen. Die Schnittkanten der Abschnitte erstrecken sich parallel zueinander. Ein auf der Außenseite des Schlauches umlaufendes Klebeband verbindet die beiden Abschnitte und bildet einen dichten Verschluß. Die Erfindung bezieht sich ferner auf ein Verfahren zur Herstellung eines Schlauches mit derartig miteinander verbundenen Abschnitten.

Bei der kontinuierlichen Herstellung von Schläuchen ist es häufig erforderlich, zum Einbringen von Beschichtungsflüssigkeiten in das Schlauchinnere oder zum Entfernen von Prozeßgasen, welche sich im Schlauchhohlraum ansammeln, den Schlauch in bestimmten Abständen mit einer Offnung zu versehen, welche nach Einbringen der Beschichtungsflüssigkeit bzw. Entfernen der Prozeßgase wieder mit einer Abdeckung verschlossen wird (DE-OS 18 14 590, DE-OS 29 34 306). Es ist ferner bekannt, zur Öffnung des Schlauches einen Längsschlitz einzuschneiden und danach das mit dem Einschnitt versehene Schlauchstück aus dem Schlauch herauszuschneiden und zu verwerfen. Die durch das Herausschneiden des Schlauchstücks entstehenden Enden der beiden Schlauchabschnitte müssen dann wieder miteinander verbunden werden, was im allgemeinen dadurch erfolgt, daß man das Ende eines Schlauchabschnitts in den Hohlraum des anderen Schlauchabschnittes etwa 10 cm weit hineinschiebt und die Verbindung durch einen rund um den Schlauch gelegten Klebestreifen fixiert.

Die Herstellung dieser überlappenden Verbindung der beiden Schlauchabschnitte ist nur in einem aufwendigen Arbeitsschritt möglich, der eine einfache Automatisierung nicht zuläßt. Diese Verbindungsart hat darüber hinaus noch den - schwerwiegenden Nachteil, daß beim Einführen von rohrförmigen Gegenständen, wie z.B. dem Raffdorn einer Raffvorrichtung bei der Herstellung dicht geraffter Wursthüllen oder dem Füllrohr einer Füllvorrichtung zum Einpressen von pastösen Produkten, auf eine bestimmte Bewegungsrichtung zu achten ist. Die relative Bewegung zwischen Rohr und Schlauch muß stets so ablaufen, daß das Rohr beim Durchlaufen der Verbindungsstelle vom innenliegenden Schlauchabschnitt in den Hohlraum des anderen Schlauchabschnitts gelangt. Wird das Rohr dagegen in umgekehrter Richtung durch den Schlauch geschoben, trifft es an der Verbindungsstelle auf den innenliegenden Schlauchabschnitt, so daß der Verfahrensablauf gestört ist und die Verbindungsstelle gegebenenfalls sogar geöffnet wird.

Es ist deshalb bei der Produktion des Schlauches darauf zu achten, daß die an den Verbindungsstellen innenliegenden Schlauchabschnitte in Maschinenrichtung gesehen stets den nachfolgenden Schlauchabschnitt bilden, so daß beim Raffen bzw. beim Füllprozeß der in Gegenrichtung von der Rolle ablaufende Schlauch an jeder Verbindungsstelle in der korrekten Richtung über den Raffdorn bzw. über das Füllrohr geführt wird. Wenn somit eine Schlauchrolle vor der weiteren Verarbeitung noch bedruckt wird, ändert sich die Ablaufrichtung des bedruckten, wieder aufgewickelten Schlauches in die Gegenrichtung. Wegen der Verbindungsstellen muß deshalb nach Beendigung des Druckvorgangs in einem zusätzlichen Arbeitsgang eine Zurückrollung erfolgen.

Eine weitere Verbindungstechnik sieht das Stoß an Stoß-Verkleben mit Klebstreifen vor. Selbst bei exaktester Stoß an Stoß-Verklebung wird sich durch Wickelspannung einerseits und Schrumpf des Schlauchmaterials auf der Rolle andererseits ein Spalt bilden, der durch den Klebstreifen abgedeckt ist. Dadurch kommt im flachgelegten Zustand die Klebeseite des Klebstreifens der Oberseite mit der Klebeseite des Klebstreifens der Unterseite in Kontakt, so daß der Schlauch an der Klebestelle verschlossen ist und sich nicht leicht oder - schadfrei öffnen läßt.

Es ist somit Aufgabe der Erfindung, für diesen Zweck eine einfacher herzustellende Verbindung der Schlauchabschnitte anzugeben, welche eine leichte technische Automatisierung zuläßt. Außerdem soll der Schlauchinnenraum im Bereich der Verbindungsstellen so ausgestaltet sein, daß der Schlauch problemlos und unabhängig von der Laufrichtung über rohrförmige Körper gezogen werden kann.

Diese Aufgabe wird gelöst bei dem Schlauch der eingangs genannten Art durch die im kennzeichnenden Teil des Anspruchs 1 angegebenen Merkmale. Besonders vorteilhafte Ausgestaltungen sind den abhängigen Ansprüchen zu entnehmen. Die Aufgabe wird ferner gelöst durch das Verfahren nach Anspruch 6 und seine weitere Ausbildung nach Anspruch 7.

Der Schlauch ist vorzugsweise eine Verpackungshülle, insbesondere eine künstliche Wursthülle. Er besteht aus einem üblichen Trägermaterial, z.B. aus flexiblem Kunststoff oder Cellulose und weist ein für den Anwendungszweck geeignetes Kaliber auf. In besonderer Ausführungsform ist der Schlauch eine künstliche Wursthülle in Form eines flexiblen Kunststoffschlauchs, insbesondere auf Basis von schlauchförmig extrudierten Homo-oder Copolymerisat von Amiden, eines nicht verstärkten Celluloseschlauchs, wie er z.B. als sogenannter Schäldarm bekannt ist, oder in Form eines sogenannten Faserdarms, der eine Trägerschicht aus faserverstärkter Cellulose und gegebenenfalls eine bei Cellulosehüllen übliche Innen-und/oder Außenbeschichtung oder Imprägnierung aufweist. Diese faserverstärkten Wursthüllen zeigen gewöhnlich ein Kaliber von 40 bis 150 mm. Der Schlauch kann in flachgelegter Form auf einer Rolle aufgewickelt oder als einseitig abgebundener Abschnitt vorliegen. Er läßt sich auch problemlos auf einen rohrförmigen Raffdorn aufschieben und auf 1 bis 2 % seiner Ursprungslänge raffen und zusammenpressen. Er zeigt dann die Form eines Hohlstabs, der zur maschinellen Verarbeitung auf das Füllrohr einer Füllmaschine aufgeschoben werden kann.

Der Schlauch besteht aus zwei oder mehr Schlauchabschnitten, die in einer speziellen Art miteinander verbunden sind. Jeder Abschnitt zeigt im Bereich der Verbindungsstelle möglichst geradlinige Schnittkanten, welche zur Längsachse der Schlauchabschnitte einen rechten Winkel oder annähernd einen rechten Winkel bilden.

Die Verbindung der Schlauchabschnitte erfolgt im flachgelegten Zustand. Jeder Schlauchabschnitt zeigt dann zwei parallel sich erstreckende Faltkanten. Beide Faltkanten begrenzen zwei übereinanderliegende Schlauchhälften und enden im rechten Winkel an der Schnittkante des Schlauchabschnitts.

Die beiden flachgelegten Schlauchabschnitte werden zur gegenseitigen Verbindung übereindergelegt, so daß die Faltkanten des einen Schlauchabschnitts mit denen des anderen Schlauchabschnitts durchgehende, fluchtende Linien bilden und beide Schlauchabschnitte sich in entgegengesetzten Richtungen erstrecken. In dieser Lage müssen die Schnittkanten der beiden Schlauchabschnitte zwangsläufig parallel zueinander verlaufen und beide Schlauchabschnitte eine gemeinsame Längsachse besitzen.

Die beiden zunächst noch lose übereinanderliegenden Schlauchabschnitte berühren sich in einem Überlappungsbereich, der etwa rechteckige Form aufweist. Die Länge der längeren Linien dieser Rechtecksform werden von der Länge der flachgelegten Schnittkanten bestimmt. Die Breite des rechteckigen Überlappungsbereiches wird durch den gegenseitigen Abstand der Schnittkanten festgelegt, welcher im Verhältnis zur Länge der flachgelegten Schnittkanten gering ist und vorzugsweise 10 mm nicht überschreiten sollte. Im allgemeinen wird der gegenseitige Abstand der Schnittkanten, wodurch die Größe des Überlappungsbereiches variierbar ist, im Bereich von 1 bis 5 mm gewählt.

Als nächster Schritt erfolgt die Umwicklung der beiden übereinanderliegenden Schlauchabschnitte im Bereich der Überlappung mit einem Klebeband, vorzugsweise mit einem Haftklebeband, welches allein durch Druckeinwirkung eine feste Verbindung herstellt. Unter einem Klebeband sind alle möglichen Bänder zu verstehen, welche zwischen dem Band und der Schlauchoberfläche eine feste, wenn auch gegebenenfalls wiederlösbare Verbindung herstellen. Die beiden Schlauchabschnitte befinden sich in diesem flachgelegten Zustand noch übereinander.

Beim Öffnen des Schlauches unter Bildung eines annähernd ovalen oder kreisrunden Querschnitts tauschen nun die beiden im Innern der miteinander verbundenen Abschnitte angeordneten Schnittkanten ihre Plätze. Die innenliegende Schnittkante des unten liegenden Schlauchabschnitts rutscht nach oben, und die innenliegende Schnittkante des oben liegenden Schlauchabschnitts rutscht nach unten. Der Schlauch zeigt dann die in Anspruch 1 angegebene Verbindungsstelle.

Der Schlauch mit den erfindungsgemäß verbundenen Schlauchabschnitten läßt sich ohne weiteres auf rohrförmige Gegenstände, wie z.B. auf ein Füllrohr oder einen Raffdorn aufschieben. Das Verfahren zum Verbinden der Schlauchabschnitte ist einfach und kostengünstig und läßt sich leicht durch automatische Maschinen durchführen.

Die Erfindung wird durch die Figuren näher erläutert. Es zeigt

Figur 1 zwei übereinanderliegende Schlauchabschnitte vor dem Verbinden in Draufsicht,

Figur 2 die Darstellung der Figur 1 im Querschnitt entlang der Linie II-II mit zusätzlichem Klebeband,

Figur 3 den in Figur 2 gezeigten Schlauch im geöffneten Zustand,

Figur 4 den Schlauch der Figur 3 in aufgeschnittenem Zustand in perspektivischer Ansicht.

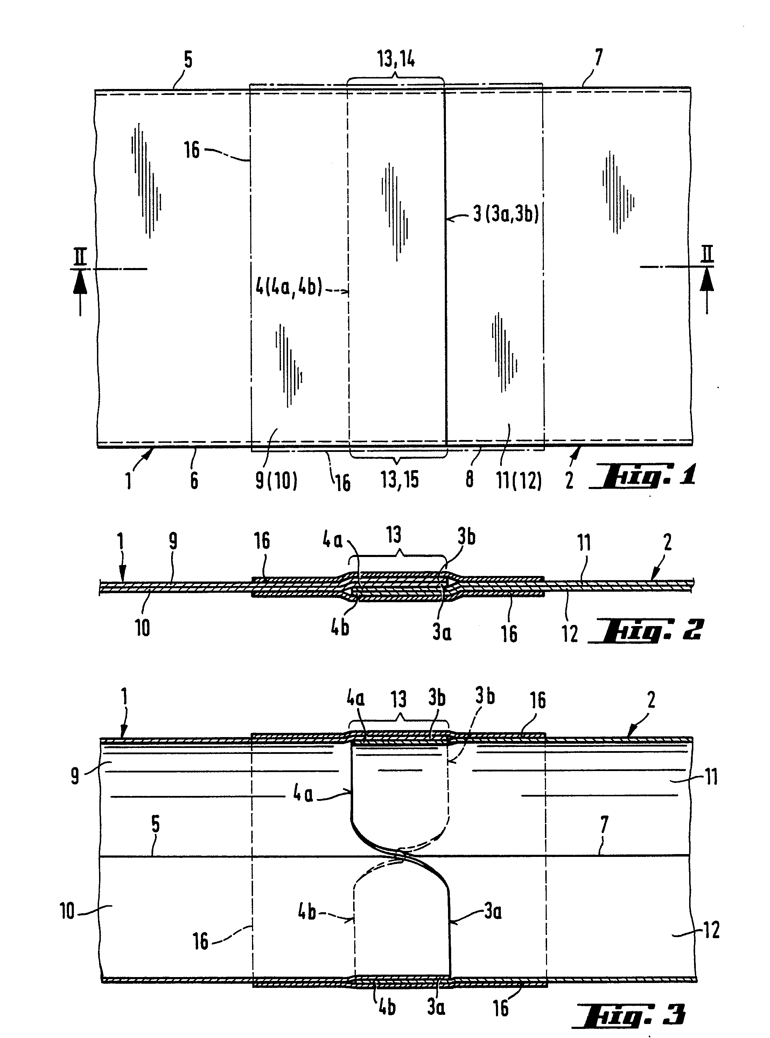

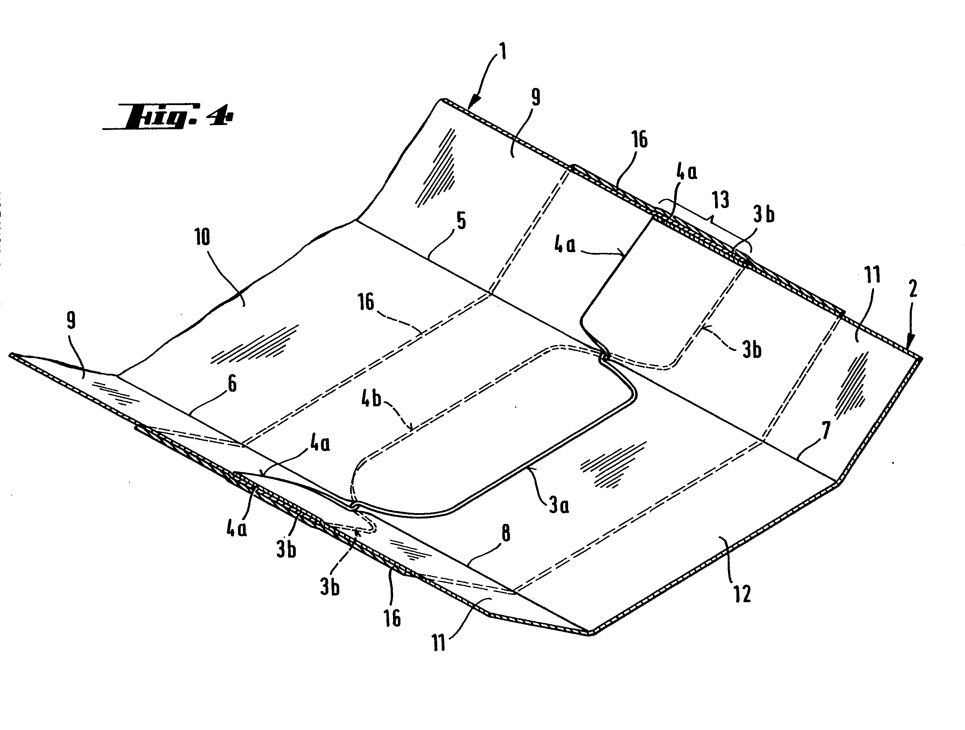

In der Figur 1 sind die Schlauchabschnitte 1 und 2 flach übereinandergelegt. Jeder Abschnitt 1,2 endet in einer geradlinigen Schnittkante 3,4 und zeigt jeweils Faltkanten 5,6 bzw. 7,8. Die Faltkanten 5,6 bzw. 7,8 begrenzen die übereinanderliegenden Schlauchhälften 9,10 bzw. 11,12 (Figur 2). Der rechteckige Überlappungsbereich 13 wird begrenzt durch die Schnittkanten 3,4 und die Strecken 14 und 15 der Faltkanten 5,7 und 6,8, welche gleichzeitig den Abstand der Schnittkanten 3,4 angeben.

In Figur 2 bis Figur 4 haben die Ziffern 1 bis 15 die gleiche Bedeutung. Der Überlappungsbereich 13 ist durch ein Klebeband 16 abgedeckt. Mit 3a und 4a sind die jeweiligen inneren Schnittkanten bezeichnet, welche bei dem geöffneten Schlauch der Figur 3 die Plätze tauschen. Die Schnittkanten 3b und 4b liegen außen.

**Ansprüche**

1. Aus miteinander verbundenen Abschnitten (1,2) bestehender Schlauch, insbesondere künstliche Wursthülle, wobei die Abschnitte (1,2) an der Verbindungsstelle etwa im rechten Winkel zur Schlauchlängsachse und zueinander parallel verlaufende Schnittkanten (3,4) aufweisen und durch ein die Schlauchaußenseite umlaufendes Klebeband (16) miteinander verbunden sind, dadurch gekennzeichnet, daß bei flachgelegtem Schlauch, welcher zwei parallel sich erstreckende Faltkanten (5,6,7,8) aufweist, der von einer ersten Faltkante (5) zur anderen gegenüberliegenden Faltkante (6) sich erstreckende Teil (3a) der Schnittkante (3) des einen Abschnitts (1) im Schlauchinnern und der andere Teil (3b) dieser Schnittkante (3) von der zweiten Faltkante (6) zurück zur ersten Faltkante (5) auf der Schlauchaußenseite liegt, während Teile der Schnittkante (4) des anderen Abschnitts (2) in umgekehrter Anordnung sich zuerst auf der Schlauchaußenseite (Teil 4b) und dann im Schlauchinnern (Teil 4a) befinden.

2. Schlauch nach Anspruch 1, dadurch gekennzeichnet, daß der Abstand der Schnittkanten (3,4) der beiden Abschnitte (1,2) im Verhältnis zur Länge der Schnittkanten (3,4) relativ gering ist, vorzugsweise 10 mm nicht überschreitet, insbesondere 1 bis 5 mm beträgt.

3. Schlauch nach Anspruch 1 oder 2, dadurch gekennzeichnet, daß er aus gegebenenfalls faserverstärkter Cellulose oder flexiblem Kunststoff wie Polyamid oder Polyester besteht.

4. Schlauch nach einem der Ansprüche 1 bis 3, dadurch gekennzeichnet, daß er zu einem Hohlstab gerafft ist.

5. Schlauch nach einem der Ansprüche 1 bis 4, dadurch gekennzeichnet, daß das Klebeband (16) einen Haftklebstoff enthält.

6. Verfahren zur Herstellung eines Schlauches, welcher aus den im Anspruch 1 genannten miteinander verbundenen Abschnitten (1,2) besteht, gekennzeichnet durch die folgenden Verfahrensschritte, daß

(a) zwei flachgelegte Schlauchabschnitte (1,2) mit jeweils etwa im rechten Winkel zur Schlauchlängsachse verlaufender Schnittkante (3,4) übereinandergelegt werden, so daß die Schnittkanten (3,4) im wesentlichen zueinander parallel verlaufen und die beiden Schlauchabschnitte (1,2) sich in entgegengesetzten Richtungen erstrecken und eine gemeinsame Längsachse besitzen, wobei der durch den gegenseitigen Abstand (14,15) der Schnittkanten (3,4) festgelegte Überlappungsbereich (13) der beiden Abschnitte (1,2) vorzugsweise relativ gering ist im Vergleich zur Länge der Schnittkanten (3,4),

(b) ein den Überlappungsbereich (13) abdeckendes Klebeband (16) um den Schlauchumfang gewickelt wird und dadurch die beiden Abschnitte (1,2) miteinander verbunden werden.

7. Verfahren nach Anspruch 6, dadurch gekennzeichnet, daß der gegenseitige Abstand (14,15) der Schnittkanten (3,4) zur Festlegung des Überlappungsbereiches (13) 10 mm nicht überschreitet, insbesondere 1 bis 5 mm beträgt.

**Fig. 1**

**Fig. 2**

**Fig. 3**

HOECHST AKTIENGESELLSCHAFT
87/K 021

**Fig. 4**

HOECHST AKTIENGESELLSCHAFT
87/K 021